Europäisches Patentamt

European Patent Office

Office européen des brevets

(11) Veröffentlichungsnummer: **0 439 673 A2**

# EUROPÄISCHE PATENTANMELDUNG

(21) Anmeldenummer: 90116797.3

(22) Anmeldetag: 01.09.90

(51) Int. Cl.5: **G21C 19/02**

(30) Priorität: 01.02.90 DE 4002924

(43) Veröffentlichungstag der Anmeldung:
07.08.91 Patentblatt 91/32

(84) Benannte Vertragsstaaten:
BE CH DE LI SE

(71) Anmelder: Noell GmbH
Alfred-Nobel-Strasse 20
W-8700 Würzburg 1(DE)

(72) Erfinder: Hardt, Norbert
Volgersweg 26
W-3000 Hannover 1(DE)
Erfinder: Sterner, Hakan
a.d. Lärchenberge 14c
W-3000 Hannover 1(DE)
Erfinder: Popp, Werner
Obere Dorfstrasse 9
W-3451 Holle(DE)
Erfinder: Rennspies, Paul
Preusssiedlung 20
W-3150 Peine/Handorf(DE)

(74) Vertreter: Kaiser, Henning
c/o Preussag AG, Patente und Lizenzen,
Postfach 15 12 27 Kurfürstendamm 32
W-1000 Berlin 15(DE)

(54) Mechanische Vorrichtung zum gegenseitigen Verbinden oder Lösen von Werkstückteilen.

(57) Mechanische Vorrichtung zum Verbinden oder Lösen eines Werkstückteiles mit oder von einem anderen Werkstückteil durch eine Drehbewegung, die einen beweglichen Teil (1) zur kraftschlüssigen Aufnahme des einen zu verbindenden oder zu lösenden Werkstückteiles aufweist, ein weiteres Teil (6), das gegenüber dem beweglichen Teil drehfest ist und mehrere Stützen (5), deren Enden mit dem beweglichen Teil und mit dem drehfesten Teil über Gelenke (4a, 4b) in Verbindung stehen, die jeweils zur Praktizierung mehrerer Freiheitsgrade ausgebildet sind.

Die Vorrichtung ermöglicht ein schnelles und einfaches Verbinden oder Lösen von Werkstückteilen, die mit dem Gegenstück über eine Drehverbindung, wie Gewinde, Bajonettverschluß, in Kontakt stehen.

## MECHANISCHE VORRICHTUNG ZUM GEGENSEITIGEN VERBINDEN ODER LÖSEN VON WERKSTÜCKTEI-LEN

Die Erfindung betrifft eine mechanische Vorrichtung zum Verbinden oder Lösen eines Werkstückteiles mit oder von einem anderen Werkstückteil durch eine Drehbewegung.

Der Erfindung liegt die Aufgabe zugrunde, das gegenseitige Verbinden oder Lösen von Werkstückteilen zu erleichtern und hierfür eine entsprechende Vorrichtung zu schaffen.

Zur Lösung der Aufgabe wird eine Vorrichtung vorgeschlagen, mit einem beweglichen Teil zur kraftschlüssigen Aufnahme des einen zu verbindenden oder zu lösenden Werkstückteiles, mit einem weiteren Teil, das gegenüber dem beweglichen Teil drehfest ist und mit mehreren Stützen, deren Enden mit dem beweglichen Teil und mit dem drehfesten Teil über Gelenke in Verbindung stehen, die jeweils zur Praktizierung mehrerer Freiheitsgrade ausgebildet sind.

Die erfindungsgemäße Vorrichtung ermöglicht ein schnelles und einfaches Verbinden oder Lösen von Werkstückteilen, die mit dem Gegenstück über eine Drehverbindung wie Gewinde, Bajonettverschluß usw. in Kontakt stehen.

In weiteren Ausgestaltungen der Erfindung ist es vorteilhaft,
wenn für das bewegliche Aufnahmeteil eine Hubbegrenzung vorgesehen ist,
wenn zwischen dem beweglichen Aufnahmeteil und den Stützen ein in einer Drehrichtung des beweglichen Aufnahmeteiles wirkender Freilauf angeordnet ist, wenn ein Kraftgebilde vorgesehen ist, das die beiden Teile, und zwar das bewegliche Aufnahmeteil und das drehfeste Teil voneinander entfernt,
wenn das bewegliche Teil zur kraftschlüssigen Aufnahme des einen zu befestigenden oder zu lösenden werkstückteiles mit Spannklauen ausgerüstet ist, die schwenkbar sind und ein Gewicht aufweisen.

Eine bevorzugte Ausführungsform der Erfindung ergibt sich, wenn sich das bewegliche Aufnahmeteil über Rollglieder axial bewegbar und mit das Drehmoment des beweglichen Aufnahmeteiles übertragenden Mitteln an einem Gebilde abstützt, das sich drehbar über Rollglieder radial gegen ein Gebilde stützt, das konzentrisch zur Drehachse des Aufnahmeteiles fixiert ist.

Der Vorteil dieser Ausführungsform besteht darin, daß sie sehr funktionsstabil ist und ferner die Voraussetzung dafür bietet, die Vorrichtung auch für große und vor allem schwere Werkstückteile einsetzen zu können.

Ein Ausführungsbeispiel des Erfindungsgegenstandes, und zwar im Einsatz für große, schwere Werkstückteile ist in der Zeichnung dargestellt und wird im folgenden näher beschrieben.

Die Zeichnung zeigt als

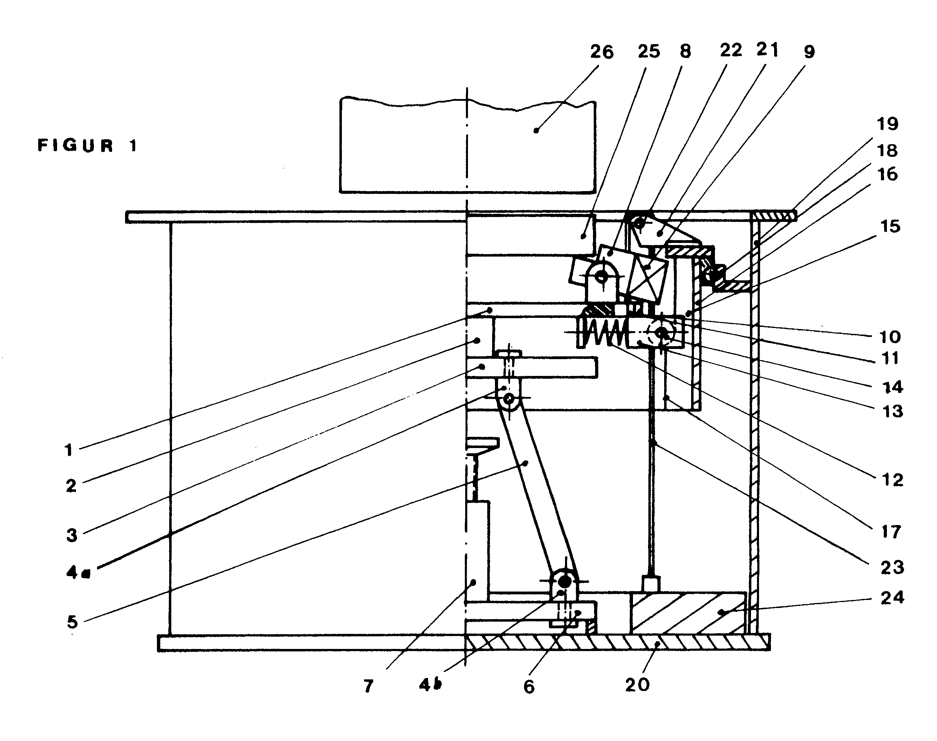

Fig. 1    die teilweise geschnittene Seitenansicht einer Vorrichtung mit einem Fußteil, das an einem Behälter befestigt werden soll,

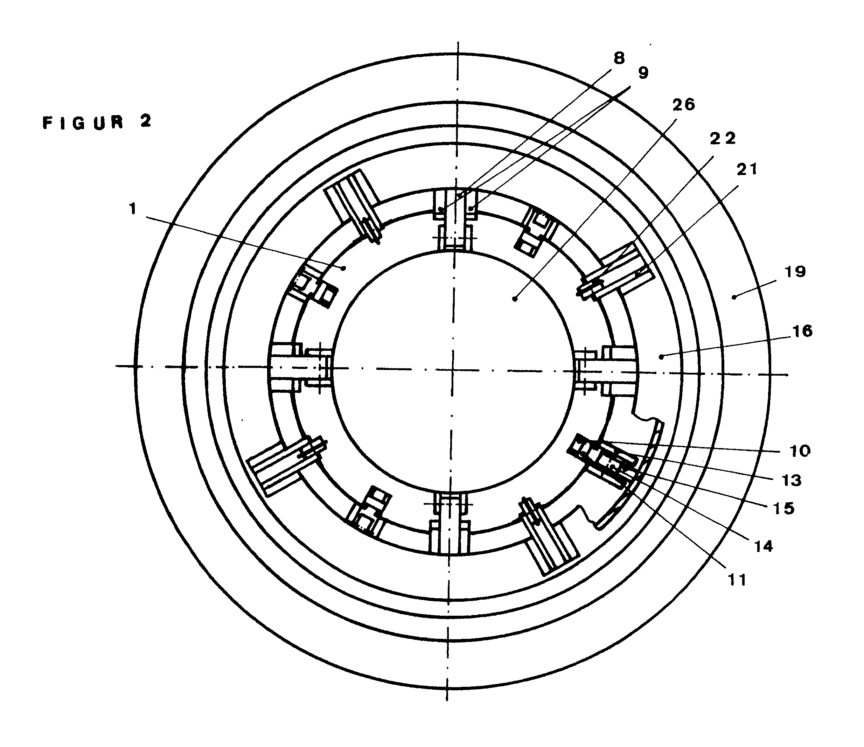

Fig. 2    die Draufsicht auf die Fig. 1.

Mit 1 ist ein bewegliches Teil bezeichnet, das über einen in einer Drehrichtung wirkenden Freilauf 2 und Flanschteilen 3 über Gelenke 4a mit Stützen 5 in Verbindung steht, die über Gelenke 4b mit einem drehfesten Teil 6 verbunden sind. Die Zahl der Stützen 5 beträgt drei Stück. Die Gelenke 4a und 4b befinden sich auf konzentrisch zur Symmetrieachse der Teile 1 und 6 verlaufenden Kreislinien und weisen jeweils zwei Achsen auf, von denen die eine Achse parallel zur Symmetrieachse der Teile 1 und 6 verläuft und die andere Achse in einer um 90° zur ersten Achse versetzten Ebene. Auf dem drehfesten Teil 6 ist eine verstellbare Hubbegrenzung 7 für das bewegliche Teil 1 angeordnet. Das bewegliche Teil 1 ist mit Spannklauen 8 ausgerüstet, die schwenkbar sind und ein Gewicht 9 aufweisen. Das bewegliche Teil 1 ist ferner mit mehreren, gleichmäßig auf seinem Umfang verteilten schwalbenschwanzförmigen Einschnitten 10 versehen, in denen über Zapfen 11 durch Federn 12 druckbeaufschlagte Halterungen 13 geführt sind, in denen ein Rollglied 14 gelagert ist. Jedes Rollglied 14 stützt sich an einer Rippe 15 ab, die gleichmäßig rund um das Aufnahmeteil 1 verteilt an einem Ringteil 16 angeformt sind und die einen Vorsprung 17 aufweisen. Das Ringteil 16 stützt sich drehbar über in einem Drehkranz gelagerte Rollglieder 18 radial gegen ein Wandteil 19, das durch Befestigung am einem Bodenteil 20, an dem auch das Teil 6 befestigt ist, konzentrisch zur Drehachse des Aufnahmeteiles 1 fixiert ist. Das Wandteil 19 bildet zusammen mit dem Bodenteil 20 einen standfesten Behälter. Auf dem Ringteil 16 befinden sich mehrere, gleichmäßig auf seinem Kreisumfang verteilte Lagerböcke 21 mit einer Umlenkrolle 22. Über jede Umlenkrolle 22 ist ein Seil 23 geführt, das mit einem Ende an dem beweglichen Teil 1 und mit dem anderen Ende an einem Gewicht 24 befestigt ist. Mit 25 ist ein Fußteil bezeichnet, das über einen nicht näher veranschaulichten Bajonettverschluß an einem Behälter 26 befestigt werden soll.

Die erfindungsgemäße Vorrichtung arbeitet wie folgt: Auf die Spannklauen 8 wird ein Fußteil 25 aufgesetzt. Die Spannklauen 8 schwenken dadurch selbsttätig und verspannen sich mit dem Fußteil 25 zu einer kraftschlüssigen Einheit. Durch die Rastung der Rollglieder 14 und auch durch das Gewicht 24 verbleibt das zu befestigende Fußteil 25 zunächst in seiner ursprünglichen Höhenlage. Es wird dann senkrecht auf das Fußteil 25, z. B. mit einem Hebezeug, ein Behälter 26 herabgelassen. Durch das Gewicht des Behälters 26 erfolgt eine Entrastung der Rollglieder 14 und das Teil 1 wird bis zu der Hubbegrenzung senkrecht nach unten bewegt. Während der Abwärtsbewegung des Teiles 1 werden die Stützen 5 verschwenkt und dadurch bedingt das Teil 1 zusammen mit dem Fußteil 25 in Drehung versetzt. Durch diese Drehung schieben sich zur Herstellung eines Bajonettverschlusses Segmente des Behälters 26 in entsprechende Verankerungen des Fußteiles 25. Bei Anheben des Behälters 26 und des an ihm befestigten Fußteiles 25 wird das Teil 1 durch das Gewicht 24 wieder nach oben in die Ausgangsposition gezogen, wobei der unter dem Teil 1 befindliche Freilauf 2 dafür sorgt, daß während der Aufwärtsbewegung eine Drehbewegung des Teiles 1 unterbleibt.

Die vorstehend beschriebene beispielhafte Vorrichtung eignet sich ganz besonders für große, schwere Bauteile, wie Behälter zur Aufnahme von radioaktiven Stoffen, die, um sie einfach und sicher aufeinander stapeln zu können, mit Fußteilen versehen werden.

**Patentansprüche**

1. Mechanische Vorrichtung zum Verbinden oder Lösen eines Werkstückteiles mit oder von einem anderen Werkstückteil durch eine Drehbewegung, gekennzeichnet durch einen beweglichen Teil (1) zur kraftschlüssigen Aufnahme des einen zu verbindenden oder zu lösenden Werkstückteiles, einen weiteren Teil (6), der gegenüber dem beweglichen Teil drehfest ist und mehrere Stützen (5), deren Enden mit dem beweglichen Teil und mit dem drehfesten Teil über Gelenke (4a, 4b) in Verbindung stehen, die jeweils zur Praktizierung mehrerer Freiheitsgrade ausgebildet sind.

2. Vorrichtung nach Anspruch 1, dadurch gekennzeichnet, daß für das bewegliche Aufnahmeteil (1) eine Hubbegrenzung (7) vorgesehen ist.

3. Vorrichtung nach Anspruch 1, dadurch gekennzeichnet, daß zwischen dem beweglichen Aufnahmeteil (1) und den Stützen (5) ein in einer Drehrichtung des beweglichen Aufnahmeteiles wirkender Freilauf (2) angeordnet ist.

4. Vorrichtung nach Anspruch 1, gekennzeichnet durch ein Kraftgebilde (24), das die beiden Teile (1, 6) voneinander entfernt.

5. Vorrichtung nach Anspruch 1, dadurch gekennzeichnet, daß das bewegliche Aufnahmeteil (1) mit Spannklauen (8) ausgerüstet ist, die schwenkbar sind und ein Gewicht (9) aufweisen.

6. Vorrichtung nach einem oder mehreren der Ansprüche 1 bis 5, dadurch gekennzeichnet, daß sich das bewegliche Aufnahmeteil (1) über Rollglieder (14) axial bewegbar und mit das Drehmoment des beweglichen Aufnahmeteiles übertragenden Mitteln (13) an einem Gebilde (16) abstützt, das sich drehbar über Rollglieder (18) radial gegen ein Gebilde (19) stützt, das konzentrisch zur Drehachse des Aufnahmeteiles (1) fixiert ist.

FIGUR 1

EP 0 439 673 A2

FIGUR 2

EP 0 439 673 A2